# EUROPEAN PATENT SPECIFICATION

(11) **EP 4 423 731 B1**
(45) Date of publication and mention of the grant of the patent: **20.05.2026**
(21) Application number: 22803323.9
(22) Date of filing: 24.10.2022
(51) Int. Cl.: G06V 30/224, G06V 30/168

(54) **DOT CODE DETECTION**
PUNKTCODE-ERKENNUNG
DÉTECTION DU CODE DE POINTS

(30) Priority: 25.10.2021 NL 2029507
(43) Date of publication of application: 04.09.2024
(73) Proprietor: Filimade Holding B.V., 7418 EV Deventer (NL)
(72) Inventor: KERVER, Johannes Bernardus, 5653 RK EINDHOVEN (NL); VAN DOMMELEN, Bjørn-Erik Johan Willem Pieter Hendrik, 7391 EK TWELLO (NL)
(74) Representative: EP&C
(86) International application number: PCT/EP2022/079655
(87) International publication number: WO 2023/072869

(56) References cited:
- US-A1- 2019 130 236
- US-B2- 9 380 186
- HARALICK ROBERT MARTIN: "Character Recognition Using Mathematical Morphology Dynamic Global Vegetation Model View project Digital radiograph interpretation View project", 1 November 1998 (1998-11-01), pages 1 - 15, XP055930027, Retrieved from the Internet <URL:https://www.researchgate.net/publication/2683340_Character_Recognition_Using_Mathematical_Morphology> [retrieved on 20220610]
- SELLÁN SILVIA SGSELLAN@CS TORONTO EDU ET AL: "Opening and closing surfaces", ACM TRANSACTIONS ON GRAPHICS, ACM, NY, US, vol. 39, no. 6, 26 November 2020 (2020-11-26), pages 1 - 13, XP058483779, ISSN: 0730-0301, DOI: 10.1145/3414685.3417778
- REED ALASTAIR ET AL: "Watermarking spot colors in packaging", PROCEEDINGS OF SPIE, IEEE, US, vol. 9409, 4 March 2015 (2015-03-04), pages 940906 - 940906, XP060050896, ISBN: 978-1-62841-730-2, DOI: 10.1117/12.2083134

## Description

The present invention relates to a method of detecting a dot code, an item comprising a dot code and a dot code detection system for detecting a dot code.

Codes, may be used to identify items, such as products for sale, waste items, etc. The codes may be implemented as bar codes, dot codes, etc. The codes may encode data that may be used to identify the item, for example a type of the item, a manufacturer, a material type of the item, a waste separation information for sorting the item in a stream of waste, etc.

The code may for example be embedded in printed matter on the item or on a label attached to the item. The code may be readable by any suitable reader, for example by a visible light camera, a laser scanner, an infrared camera etc. Known codes, such as a bar code or a QR code, may be considered to deteriorate a visual appearance of the object.

US2019130236A1 discloses a data reading system and method for identifying and processing optical code symbols, primarily DotCode symbols. A processor analyzes the obtained image to determine a starting pattern for the DotCode symbol and to begin building the DotCode grid from the starting pattern. Once the DotCode grid has been completed, the processor generates a label hypothesis based on the identified data dots on the DotCode grid. Thereafter, a decoder unit receives the label hypothesis from the processor and decodes the label hypothesis to obtain the data for the DotCode symbol.

Tapas Kanungo and Robert M. Haralick, Character Recognition Using Mathematical Morphology, Intelligent Systems Laboratory, Electrical Engineering Department, FT-10, University of Washington, Seattle WA 98195, U.S.A., discloses a set of morphological algorithms for recognizing handwritten numerals. The basic morphological operations - dilation, erosion, opening and closing - are used to extract characteristic features of these characters and check for their appropriate topological configuration. The paper discloses the key shape characterization for two groups containing a total of the six numerals on which has been worked and provides the morphological algorithms for their recognition.

SILVIA SELLAN et. al., Opening and Closing Surfaces, ACM Trans. Graph., Vol. 39, No. 6, Article 198. Publication date: December 2020, discloses a type of curvature flow for curves in 2D and surfaces in 3D. The flow is inspired by the mathematical morphology opening and closing operations.

In order to enhance a visual appearance of the object, it may be desirable that the dot code is visually less obtrusive to a human eye, while still being able to be detected by a dot code reader.

According to an aspect of the invention, there is provided a method of detecting a dot code comprising plural dots arranged on a background surface, wherein each dot comprises a centre surface and an edge surface which at least partly surrounds the centre surface, wherein a spectral reflectivity of the edge surface differs from a spectral reflectivity of the background surface, and wherein a spectral reflectivity of the centre surface is a same as the spectral reflectivity of the background surface, the method comprising:
irradiating the dot code and the background surface by a source of radiation capturing by a reader an image of the dot code and the background surface irradiated by the source of radiation;
distinguishing in the image the edge surface from the background surface based on the difference between the spectral reflectivity of the edge surface and the spectral reflectivity of the background surface;
processing the image of the dot code by dilating in the image the edge surface of the dot, until the centre surface has been closed by the dilating,
reading the processed image to derive the dot code from the processed image.

The dot code comprises plural dots. The dots may be spatially arranged on a background surface, e.g. a surface of an item. The dots may be distinctive from the background in that a spectral reflectivity of the surface differs from a spectral reflectivity of the background. The difference in spectral reflectivity between the background surface and the edge surface may comprise a difference in intensity of reflection and/or a difference in wavelength of reflection. The background surface is to be understood a surface that surrounds the dots. As the dots may be spatially arranged on a surface of the item, the background may for example be formed by the surface of the item or printed matter on the item.

The dot comprise a centre surface and an edge surface which fully or partially surrounds the centre surface. The edge surface may enclose the centre surface, i.e. entirely the centre surface of may partially surround the centre surface thus leaving at least one opening where the centre surface and the background surface are immediately adjacent to each other (e.g. the background surface and the centre surface may contact each other).

The background surface, centre surface and the edge surface may for example form parts of printed matter on the surface of the item. As another example, the edge surface may be engraved, e.g. by laser engraving, the engraving providing that a spectral reflectivity of the edge surface differs from a spectral reflectivity of the background.

The dot code and the background surface (or a part of the background surface surrounding the dots) is irradiated by a source of radiation. The source of radiation may be configured to irradiate in a spectrum that at least partly overlaps with a spectrum in which the spectral reflectivity of the background surface differs from the spectral reflectivity of the edge surface. The source of radiation may be configured to emit any type of electromagnetic radiation, e.g. in a wavelength between 1nm and 1mm or in a wavelength between 1 cm and 10cm.

The difference in spectral reflectivity may comprise any type of difference, e.g. reflecting electromagnetic radiation of different (dominant) wavelengths.

Another example of difference in spectral reflectivity may be emitting electromagnetic radiation of a different wavelengths compared to the wavelength of the source of irradiation, when irradiated by the source of radiation., as may be the case in e.g. phosphorescence or fluorescence.

Still further examples of differences in spectral reflectivity may be found in differences in reflectivity due to texture or surface orientation, and/or differences in the amount of EM radiation reflected/absorbed, and/or differences in reflectivity due to refraction (e.g. because the materials have a different refractive index).

The combination of irradiation and differences spectral reflectivity properties may result in a contrast either in luminescence (pure intensity of the radiation) or chrominance (wavelength variation of the radiation) or a combination of luminescence and chrominance.

For example, use may be made of light yellow edge surfaces on a white background and irradiating with blue light (which the yellow edge surfaces will not reflect). This combination of blue irradiation with yellow edge surfaces on white background may create a higher contrast than would be possible with using white light.

An image of the item is captured by a reader, such as a visible light camera, an IR camera, a laser scanner, etc. The reader is configured to be detective of radiation in at least part of the spectrum in which the spectral reflectivity of the background surface differs from the spectral reflectivity of the edge surface. For this reason, the image captured by the reader may enable to distinguish the edge surface from the background, as the difference in spectral reflectivity of edge surface and background surface translates into a difference of detection of the edge surface and the background surface by the detector. The image may be a still image, e.g. a graphical data file, such as a jpg file, gif file, a raw data file of uncompressed image data, etc. Alternatively, the image may be a motion picture image, i.e. a sequence of images (e.g. image frames) e.g. embodied as a video data stream.

Based on the difference in spectral reflectivity of edge surface and background surface (i.e. the difference between the spectral reflectivity of the edge surface and the spectral reflectivity of the background surface) and the resulting difference of detection of the edge surface and the background surface by the detector, the edge surface is distinguished from the background surface, e.g. by labelling or by thresholding.

A dilation operation is performed on the edge surface in the image. Dilation is to be understood as an image processing technique, whereby the foreground object that is formed by pixels in the image that have a pixel value associated with the foreground object, is dilated by setting background pixels which are adjacent to the pixels of the foreground object, from a pixel value associated with the background (in terms of pixel amplitude and/or pixel colour) to the pixel value associated with the foreground object . As a result of the dilation, the edge surface will grow, e.g. in a direction of the centre and/or in a direction of the background surface, or both. Therefore, a size of the centre surface will be reduced. The dilation may be repeated until the centre surface has disappeared, i.e. the edge surface having been dilated to such an extent that a size of the centre surface shrinks to zero. As a result, the dot is in fact formed by the dilated edge surface, having been extended its surface to remove the centre surface.

As the dilation fills the centre surfaces of the dots, the dots may be more clearly distinguished from the background surface, thereby enabling to enhance a readability of the processed dots, as the surface thereof has been transformed by the dilation until the centre surface disappears. As a result of the disappearing of the centre surface, a surface area of the edge surface is increased into a surface that exhibits a uniform intensity and/or colour, thereby being able to enhance a readability of the dot code from the image.

On the other hand, the dots may be visually less obtrusive, as the centre surface may exhibit a spectral reflectivity that is the same or similar as the spectral reflectivity of the background surface. Therefore, the surface that distinguishes from the background may be relatively small, namely only the edge surface. The centre surface does not need to be visually distinctive in view of the background. A spectral reflectivity of the centre surface is a same as the spectral reflectivity of the background surface. To a human observer, the centre surface may hence appear to look visually the same or similar, in terms of intensity and/or colour, as the background surface, thereby promoting a visual unobtrusiveness of the dot to a human observer.

The dot code may be provided on a surface of an item, the item may be any item, such as a package, e.g. a bottle, a blister, a tray, a foil, etc. The item may be a plastic item, paper item, paper item provided with a coating, such as a water impermeable coating, etc.. The item may be a waste item, i.e. the identification may be performed in waste, e.g. in a stream of waste.

The plastic package may be any suitable plastic package, such as a bottle, a blister, a tray. The plastic package may comprise any plastic, such as polyethylene (PE), polyethylene terephthalate (PET), polypropylene (PP), or polyethyleenfuranoaat (PEF).

The dot code may be a linearly extending dot code. The code may be embodied in a form of a linearly extending string of dots. The dots of the linearly extending dot code may form a line, also referred to as the dot code line, such as a straight line or a curved line.

Each dot may encode a value, e.g. a binary value, to be visible in an image of the item. Thus, the dots of the code may each have a binary value. For example, the dots may be encoded in a form a presence or absence of the dot. For example, one value of the dot may be encoded as a presence of the dot on the surface of the item. Another value of the dot may be encoded as an absence of the dot on the surface of the item. In the case of the absence of the dot, the presence of other dots in the code, e.g. start dots and/or end dots which indicate a start of the dot code and/or an end of the dot code, may be applied to define locations on the background surface where the dots are intended to be found. Hence, an absence of a dot at such intended location may serve to identify the dot as having the value associated with the absence thereof. Alternatively, the other value of the dot may be encoded as another form of the dot on the surface of the item. As another alternative, data may be encoded in a level of the dots, e.g. using at least two levels of the dots. The levels may distinguish from each other in that a different intensity and/or a different chromaticity is used for the dot levels, e.g. a different intensity and/or different chromaticity of the edge surface. The different dot levels may be distinguished in that the spectral reflectivity's of the different dot levels differ from each other, implying a difference in chromaticity, reflectivity or both.

The dots of the dot code are spaced apart along a line which extends along the surface of the item. The dots may be arranged equidistantly along the line. The line may be a straight line and/or may be any suitable curved line. Furthermore, the line may be provided with a bend, as explained in more detail below. Thus, the dots are spaced apart, one by one, i.e. one after the other, along the line.

In an embodiment, the processing further comprises eroding the dilated edge surface. By the dilation, the size of the dots increases in that the edge surface is extend into the background surface and/or into the centre surface. As a result, a surface of the dot may have increased. The dilation may also amplify artefacts in the image, such as spots caused by noise. For example, a spot of a single pixel, due to e.g. noise, may grow to a relatively large size, as a result of the dilation. The dilation may be followed by an erosion which provides for a diminishing of the size of the foreground object, such as the dilated dot. Thereby, a risk may be reduced that the artefact could be read as a dot. Furthermore, the dilated dots in the image may be brought back to e.g. the size of the dots in the image before the dilation. Erosion s to be understood as an image processing technique, whereby the foreground object that is formed by pixels in the image that have a pixel value associated with the foreground object, is eroded by setting foreground pixels which are adjacent to the pixels of the background object, from a pixel value associated with the foreground (in terms of pixel amplitude and/or pixel colour) to the pixel value associated with the background object.

In an embodiment, the distinguishing comprises thresholding the image of the dot code. By the thresholding in the image, the edge surface in the image may be distinguished (separated) from the background surface in the image in that a threshold used in the thresholding is set between pixel values of the edge surface in the image and pixel values of the background surface in the image. Resulting from the thresholding, subsequent dilation operations or subsequent dilation and erosion operations may be performed reliably, as a distinction between edge surface and background surface has been defined by the thresholding. The thresholding may apply a threshold associated with a difference between the spectral reflection properties of the background surface and the spectral reflection properties of the edge surface, such that the difference in pixel values of the pixels imaging the edge surface and the pixels imaging the background, resulting from the difference in spectral reflection properties are thresholded, i.e. the threshold being set in between these pixel values to distinguish edge surface from background surface. For example, in the case of an engraved edge surface on a reflective background, the reader may detect an image wherein the background is light by reflecting irradiation from the source of irradiation while the edge surface diffuses the irradiation from the source of irradiation resulting in a darker pixel value in the image. The threshold may accordingly be set in between these pixel values. As another example, in the case of a white edge surface on a yellow background, the reader may detect an image wherein the background yellow by reflecting irradiation from the source of irradiation while the white edge surface to a large extent reflects the irradiation from the source of irradiation resulting in a white pixel value in the image. The threshold may accordingly be set in between these yellow and white pixel values. For example, a fixed thresholding operation may be used whereby all values greater than a threshold value are set to e.g. the maximum for the channel and all values at or below the threshold value are set to e.g. the minimum for the channel or through an adaptive threshold, whereby the threshold value is dynamically determined from the surrounding pixel values, e.g. using a moving average filter. Using the adaptive threshold, local image variations at a lower spatial frequency, such as gradually changing illumination intensity gradual background colour changes, etc. may be distinguished from local variations at a higher spatial frequency, such as dots.

In an embodiment, the processing further comprises determining a size of the edge surface in the image. The size of the edge surface may be determined by counting a number of pixels over which the edge surface extends or by counting a number of pixels over which a cross sectional dimension of the edge surface extends, counting a number of pixels along a length or width of the edge surface, etc. The determining the size may for example be performed after the thresholding, thus to facilitate identification and measurement of the edge surface. A size of a dot in the image may e.g. depend on a distance between the dot and the reader: a relatively proximate object (i.e. proximate to the reader) may be imaged larger compared to a more distant dot. In a larger size dot, the dilation and optionally erasing operations may work out in different ways, as a same amount of dilation and erasing could for example keep a centre of a large dot open while closing a small dot. Having measured the size of the dot in the image, in order to enable to perform the dilation and optionally the erasing operations to a same extent on dots, taking account of the size, an extent of the dilating of the edge surface of the dot (and optionally the erasing) may be determined from the size of the edge surface in the image. Thus, on a larger dot, dilating and erasing may encompass more iterations as compared to dilating and erasing of a smaller dot in the image. Alternatively, or further the determining the size of the edge surface may for example be used to scale the image according to the determined size of the edge surface in the image. Thereby, the size of the dots may be resized towards a standardized size, hence enabling that the dilation (and optionally erasing) have a similar effect, i.e. a dependency on a size of the dot being avoided or at least reduced.

In an embodiment, the reading the processed image to derive the dot code from the processed image comprises:
determining, for a plurality of positions in the image, a match to a template representing a dot, selecting the positions for which a highest match has been determined,
finding in the positions for which the highest match has been determined, pairs of positions at a distance that matches a dot to dot distance in the dot code,
generating, for two pairs of positions of dots, a triangle using lines through the (two) pairs of positions of dots and an intersection of the lines through the (two) pairs of positions of dots, verifying a size and angle of the triangle against a predetermined size and angle,
fitting, using the triangle, a dot code reading line onto the selected at least two pairs of positions, and
reading dots of the dot code along the dot code reading line.

Dots may be detected in the image by comparing, for plural positions in the image, e.g. plural image sub parts, the image sub part to the template and determining a similarity, i.e. a match to the template. The dots may be arranged on a curve, such as a Bezier curve. Amongst the positions, i.e. the sub parts, where a highest match is detected, grouping may be performed to group together pairs of such positions at a mutual distance that corresponds to a distance between dots in the dot code (i.e. pitch of the dots in the dot ode as imaged in the image). The pairs, which are likely to represent pairs of dots in a code, are then used to form triangles: thereto, for two pairs of positions of dots, a triangle is generated using lines through the pairs of positions of dots and an intersection line of the lines through the two pairs of positions of dots. The intersection line may for example extend between a dot of one pair and a dot of the other pair which dots have a largest mutual distance between their positions. In case of more than two pairs of dots (i.e. two pairs of positions of dots), plural corresponding triangles may be formed, each based on two respective pairs of dots. The triangles may then be verified as to whether or not the pairs from which the triangle has been formed may be part of the same dot code, namely by comparing a size and angle of the triangle against a predetermined size and angle (the predetermined size and angle being set to correspond to pairs of dots one the same dot code). For example, the predetermined size and angle may be a range. As another example the predetermined size and angle may be have a predetermined values, whereby a triangle having a size and angle closest to the predetermined values of size and angle is selected. Thus, from the pairs of positions, at least two are selected having a highest match. Using the triangle, a reading line is determined in the image, along which the dots are expected to be found. The dots (or the absence of dots in case the absence encodes a dot value of e.g. zero) may then be read in the image along the reading line. The reading line may be formed by a readout path determined from the found start/end point (possibly multiple possible readout paths); this path is processed and the resulting code is either valid or not valid; if valid the template matching process may end and the payload embedded in the code is returned.

Non-start or end dots of the code do not have to be template matched, they are simply sampled at the given location of the readout path; a sample value above the threshold yields a 0 and below a 1.

In an embodiment, the edge surface partly surrounds the centre surface providing at least one opening between the centre surface and the background surface, and wherein the dilating the edge surface of the dot closes the at least one opening between the centre surface and the background surface. The opening in the edge surface, i.e. the edge surface only partly enclosing the centre surface, further promotes a visual unobtrusiveness of the dot, as the opening in the edge (i.e. the edge not fully surrounding the centre), promotes a visual unobtrusiveness. In the image of the dot, the opening may be filled by the dilation operations, thereby facilitating a recognition of the dot, as the dilation effectively fills the opening, at least to a large extent.

In an embodiment, a colour of the edge surface is white, and wherein a colour of the centre surface is the colour of the background surface. The background/centre area is preferably non-white, whereby the edge surface is lighter than the centre surface and the background surface, in order to achieve a contrast with the edge. The other way around however is also possible, however is likely to be more visible to the human eye.

In an embodiment, the dot code comprises plural dots arranged in a geometric pattern. Using a known geometric pattern of the dot code, the dot code may be retrieved in the image as a matching to a template may be determined by the image processing, the template adhering to the geometric pattern of the dots.

For example, the geometric pattern comprises a line, enabling to perform a relatively fast matching, as matching to a line may be considered less computationally complex as compared to matching to more elaborate geometric patterns, hence enabling to quickly read the dots along the line.

According to a further aspect of the invention, there is provided an item comprising a dot code, the dot code comprising plural dots arranged on a background surface, wherein the dots comprise a centre surface which is at least partly surrounded by an edge surface, wherein a spectral reflectivity of the edge surface differs from a spectral reflectivity of the background surface and wherein a spectral reflectivity of the centre surface is a same as the spectral reflectivity of the background surface,.

According to a still further aspect of the invention, there is provided a dot code detection system for detecting a dot code comprising plural dots arranged on a background surface, wherein the dots comprise a centre surface which is at least partly surrounded by an edge surface, wherein a spectral reflectivity of the edge surface differs from a spectral reflectivity of the background surface and wherein a spectral reflectivity of the centre surface is a same as the spectral reflectivity of the background surface:
the dot code detection system comprising:
a source of radiation configured to irradiate the dot code and the background surface,
a reader configured to capture an image of the dot code and the background surface irradiated by the source of radiation;
an image processing system configured to process the image of the dot code and the background surface irradiated by the source of radiation,
wherein the image processing system is configured to:
   distinguish in the image the edge surface from the background surface based on the difference between the spectral reflectivity of the edge surface and the spectral reflectivity of the background surface;
   process the image of the dot code by dilating in the image the edge surface of the dot, until the centre surface has been closed by the dilating,
   read the processed image to derive the dot code from the processed image.

With the item according to the invention and the dot code detection system according to the invention, the same or similar effects may be achieved as with the method according to the invention. Also, the same or similar embodiments may be provided as described with reference to the method according to the invention, the embodiments providing the same of similar effects as described with reference to the embodiments of the method according to the invention.

Further advantages, features and effects of the invention will become apparent from the enclosed drawing and associated description, showing a non-limiting embodiment, wherein:
Figure 1 depicts a representation of a dot as may be comprised in a dot code;
Figure 2A - 2C depict the dot according to Figure 1 in a printing raster;
Figure 3A and 3B depict various stages of processing based on which an embodiment of a processing of a dot will be explained;
Figure 4A - 4F depict examples a dot;
Figure 5 depicts a dot code; and
Figure 6 depicts a dot code reader.

Throughout the figures, the same or like items are provided with the same or like reference numerals.

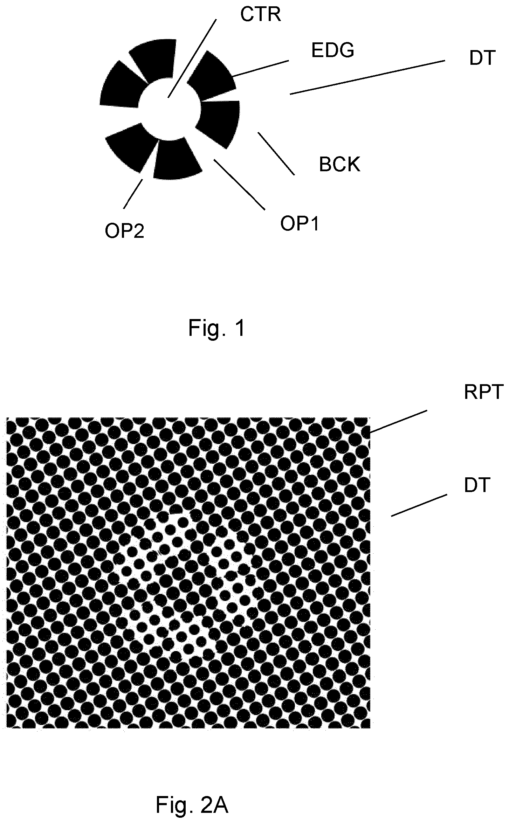

Figure 1 depicts a stylistic example of a dot as may be comprised in a dot code. The dot is arranged on a background surface BCK, such as a surface of an item, e.g. a package, such as a tray, a bottle, a foil, etc. or a label or other printed surface on the item. The dot comprises an edge surface EDG and a centre surface CTR. A_width of the edge surface may be large enough to remain visible in the image, however may be as small as possible to yield the least visible result. The size of the centre surface may be at least 2 times the pitch size of the printing raster to prevent interference between the pixels of the image and the printing raster. The edge surface at least partly surrounds the centre surface. In the present example, an outer perimeter of the edge surface adheres to a substantially circular shape. In the present example, the edge surface comprises openings OP1, OP2 which extend from the background surface towards the centre surface. In the present example, three openings OP1 which extend from the background surface into the centre surface are arranged at a mutual circumferential angle of 120 degrees, i.e. equidistantly arranged along a circumferential perimeter of the edge surface. These openings in fact disconnect parts of the edge surface from each other, i.e. split the edge surface into separate parts. Furthermore, three openings OP2 which extend from the background surface towards the centre surface are arranged at a mutual circumferential angle of 120 degrees, i.e. equidistantly arranged along a circumferential perimeter of the edge surface, at these openings, the resulting parts of the edge surface touch each other. The latter three openings OP2 are arranged, seen along the perimeter of the edge surface, equidistantly between the former three openings OP1. An effect of the full and partial openings may be that due to interaction with the rastering dots of the printing device, the printing raster, the ring becomes more invisible to the human eye which may camouflage the edge surface to a larger extent. The amount of full or partial openings may depend on the frequency of the printing device, e.g. the printing raster, and the dot gain, in general the higher the printing raster frequency and/or the lower the dot gain, the more openings may be required to optimise the visual effect. Other opening shapes might be possible however, due to the dot gain in printing, may have less or no effect. At the former three openings OP1 which provides that the remaining parts of the edge surface do not touch each other, the centre surface of the dot, i.e. the surface surrounded by the edge, connects via the openings to the background surface.

In the present example, the background surface and the centre surface are stylistically displayed in white while the edge surface is displayed in black. A practical example of embedding the dot in printed matter will be explained below with reference to Figures 2A - 2C,

Figure 2A depicts the dot DT in accordance with Figure 1, embedded in a printing raster of printed matter. The printed matter may be built up by raster points RPT as depicted in Figure 2A. The raster points are printed onto a surface, i.e. a substrate, such as a surface of an item using ink having a respective colour. The raster points form a raster, i.e. a matrix of points of ink having the respective colour. A size of the raster point, e.g. a diameter of the raster point, represents an intensity of the colour. Raster points may represent a pattern of ink in a Cyan, Magenta, Yellow, Kontrast, CMYK, colour scheme. Alternatively the raster points may represent a pattern of ink in full colour, e.g. in red or blue, etc. The dot as depicted in Figure 1 is represented in the printing raster of raster points by a change in amplitude, in the present example towards the lighter, i.e. a change towards a less intense colour, as depicted by the smaller size of the raster points representing the dot.

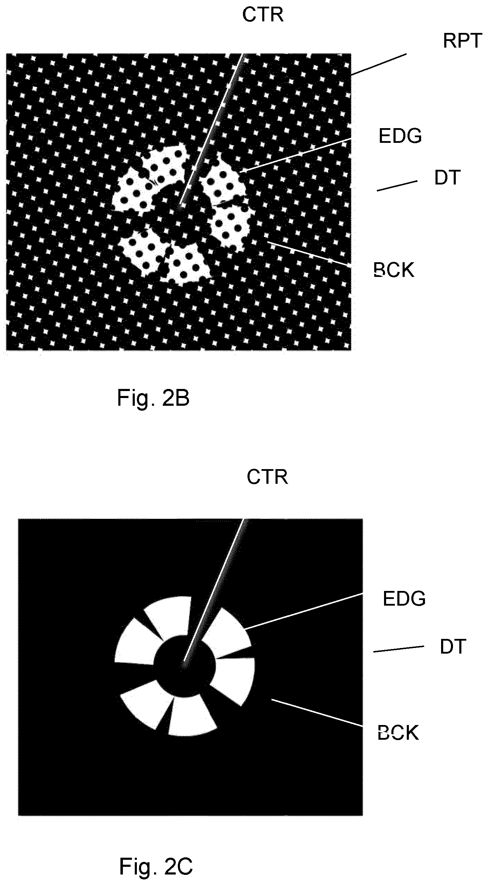

Figure 2B depicts another example of embedding the dot DT in the raster points of a printing raster. In Figure 2B, an amplitude of the background BCK is higher as compared to the background in Figure 2A, resulting in raster points in the background having a larger size. In fact, in Figure 2B, the raster points of the background touch each other while in Figure 2A, the raster points of the background are at a mutual distance, while being at a same raster pitch. A same applies to the centre CTR. For the edge surface EDG in Figure 2B, a size of the raster points is lower as compared to the size of the raster points in the edge surface of Figure 2B. Accordingly, a contrast between background surface BCK and edge surface EDG of the dot in the example depicted in Figure 2B is higher compared to the contrast between background surface and edge surface in the example depicted in Figure 2A.

Figure 2C depicts an example of an image of the same dot, i.e. the dot as depicted in Figure 1, after thresholding. The image of the dot may be generated by a reader, such as a camera, a laser scanner or any other suitable imaging means. The image as generated may be subject to a thresholding operation, whereby parts in the image, e.g. pixels in the image, above the threshold are assigned one value (e.g. high logic level or binary one) and parts in the image, e.g. pixels in the image, below the threshold are assigned another value (e.g. low logic level or binary zero). In the present example, the levels assigned by the thresholding are graphically represented by black and white respectively. As the threshold may be set between the amplitude of the background surface BCK and the amplitude of the edge surface EDG, the edge surface and the background surface are distinguished by the thresholding. A resulting thresholded image is depicted in Figure 2C, whereby in the present example the edge surface is distinguished from the background surface by the thresholding. Generally, the printing raster dots of the printing raster and the printing raster pitch may be smaller, or substantially smaller compared to the image dots of the image taken by the camera. As the centre surface CTR as well as the openings in the edge surface are represented by a same amplitude as the background, the centre surface and the openings are assigned a same level as the level of the background by the thresholding.

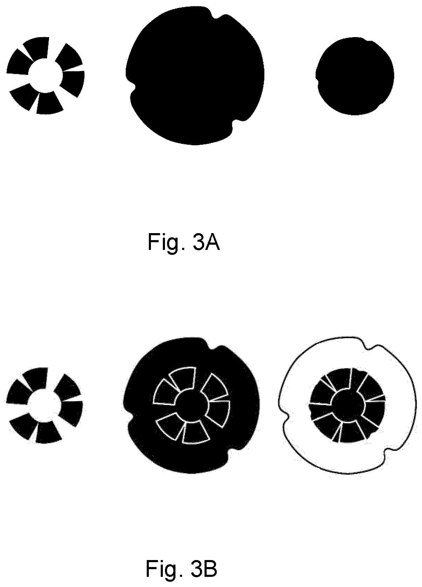

Figure 3A depicts from left to right subsequent stages of image processing. At the left, the image of the dot as thresholded in accordance with Figure 2C has been inverted, resulting in black and white being reversed.

As a next step, the centre in Figure 3A depicts the image of the dot, after having been dilated. By the dilation, the edge surface is dilated, causing surrounding pixels of the image of the edge surface to be assigned the same pixel value as the pixels of the edge surface. Generally, the dilation may be understood as an image processing operation whereby pixels in the image that have a background value and that are adjacent to a pixel having a foreground value are assigned the foreground value. In the present example, the foreground value of the inverted, thresholded image of the dot may be considered the value of black, and as a result, the dilation causes white pixels that are adjacent to a black pixel to be assigned the value of black. Dilate operations may use a kernel which determines how large (and what shape) the area of comparison is, these are normally 3x3, 5x5, 7x7 etc. Therefore a multiple successive dilate operation may normally not be required. Otherwise, the step of dilation may be repeated plural times, with each dilation, a size of the centre surface will diminish and the sizes of the openings in the edge surface will likewise diminish. The dilation may be repeated until the centre surface reduces in size to zero. As a result of plural dilations, the centre surface may be filled by the dilated edge surface. Similarly, the openings in the edge surface may be filled by the dilated edge surface, e.g. leaving minor indents in the outer perimeter of the dot, i.e. minor dents in the outer perimeter of the dilated edge surface.

It is to be understood that the dilation of the edge surface may in fact also be performed by an eroding of the background, i.e. pixels of the background which are adjacent to a pixel having a foreground value are assigned the foreground value.

Figure 3A, at the right side, depicts a result of an eroding of the dilated dot. After the dilation of the edge surface, the subsequent eroding may bring the dot back to the original size in the image. As the centre surface and the openings are substantially closed by the dilation, the subsequent eroding will reduce a size of the dot back towards its original size before the dilation, however the centre surface and the openings in the edge surface will remain closed. Thus, the dilation operation transforms the dot with openings and centre into a closed dot having the dilated edge surface fully covering the dot. In case the eroding is performed in a same amount, i.e. a same number of iterations, the outer diameter of the dot in the image may be brought back to the original size before the dilation.

An extent of dilation may be determined by detecting in the image a size of the dot, e.g. a size of a perimeter of the edge surface or a size of a perimeter of the centre surface. The image may then for example be resized so as to resize the dots to a desired, nominal size in the image. The dilation can then be performed based on the nominal size. Alternatively, the amount of dilation may be set in accordance with the determined size: the larger the size of the dot, the more iterations of dilation being performed.

The process of dilation and erosion is further illustrated in Figure 3B, depicting from left to right the inverted, thresholded image of the dot, i.e. the same as the left side of Figure 3A, the dilated dot (centre) and the eroded dilated dot right side). In the dilated dot, a contour of the thresholded, inverted dot is indicated to further illustrate a transformation of the dot by the dilation. As explained above with reference to Figure 3A, the dilation is performed until the centre surface is closed and the openings are closed. In the eroded, dilated dot at the right side of Figure 3B, a contour of the dilated dot is depicted to illustrate an effect of the erosion on the dilated dot in the image. Further, a contour of the original dot in the image is depicted, to illustrate an accumulated effect of the dilation and erosion on the dot in the image, further to the explanation as provided above with reference to Figure 3A.

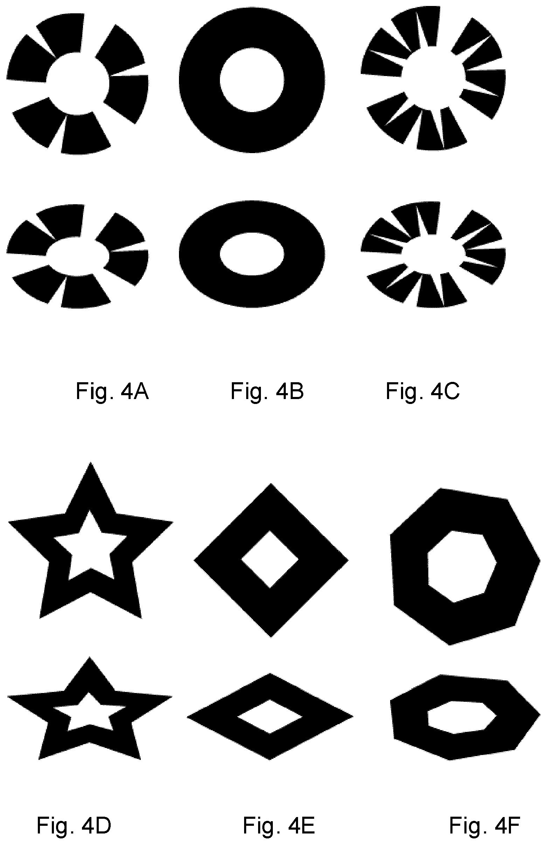

Figure 4a - 4F depicts various illustrate examples of dots as may be applied according to the present disclosure.

Figure 4A depicts, at a top, a dot similar to the dot depicted in Figure 1. An oval alternative to the circular perimeter is depicted in Figure 4A, bottom. Figure 4B depicts a round and oval dot, without openings. Figure 4C depicts the dot in accordance with Figure 4A, further provided with openings in the edge surface extending from the centre surface into the edge surface. Figure 4D depicts a star shaped dot, whereby the edge surface and the centre surface are arranged in a star shape. Figure 4E depicts a quadrangular shaped dot, whereby the edge surface and the centre surface are arranged in a quadrangular shape. Figure 4F depicts a hexagonal shaped dot, whereby the edge surface and the centre surface are arranged in a hexagonal shape. In Figures 4C - 4F, bottom parts, similar to the oval shapes depicted in Figures 4a and 4B, bottom parts, a slightly deformed version is shown, whereby in the present example the vertical, y, axis in the plane of drawing is compressed. Oval printing dots are widely used in commercial printing industry. In case the dots of the dot code have a same shape as the printing dots used in the print, invisibility may be optimised. Other shapes might be used in occasions where special rasterizations are used or where the specific dot could be visually part of the artwork.

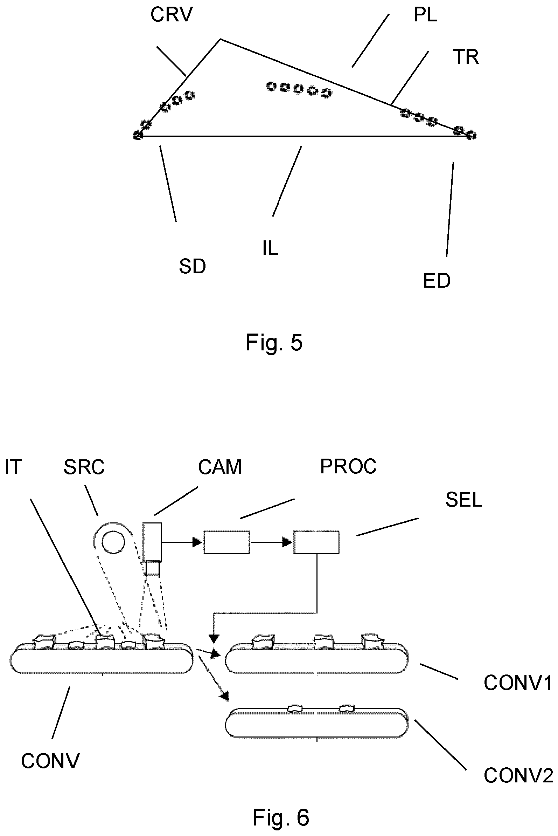

Figure 5 depicts an example of a dot code comprising plural dots. The dots may each have a shape such as the ones depicted in Figure 1 - 4F. In the present example, the dot code is a linear code whereby the dots are arranged along a line which is, in the present example, shaped according to a curve. The dot positions are arranged at a predetermined mutual distance along the line. The presence of absence of a dot at the dot position may be used to signal a value of the dot, such as a binary value, in that e.g. the presence of a dot codes a binary one while the absence of a dot codes a binary zero or vice versa. The dot code may be comprised of dots having different purposes: as depicted in the present example, the dot code comprises plural start dots SD and end dots ED, which may each encode a predetermined binary sequence, thus signalling a start respectively an end of the dot code. The dots that signal the start and end of the dot code may for example be detecting by the image processing, and a curve CRV may be fitted to connect the dots that signal the start to the dots that signal the end of the dot code, such as a Bezier curve. In the present example, the start code may be formed by dot, dot, no-dot (e.g. coding 110). In the present example, the start code and end code are symmetrical, thus the end code being no-dot, dot, dot (coding e.g. 011). A payload PL, i.e. data stored in the dot code, may be coded in the dots arranged along the curve between the start dots and the end dots. The presence or absence of dots may then be read along the Bezier curve, at the predetermined distances along the curve. The predetermined distances may for example be derived from the distances between the dots that form the start respectively the dots that form the end of the dot code or both. As another example, the distances may be derived from an overall distance along the curve between the start dots and end dots, divided by a predetermined number of dot positions between the start code and end code.

The dots of the dot code may be detected in the image by comparing, for plural image sub parts, the image sub part to a template of the dot, and determining a similarity, i.e. a match to the template. Amongst the positions, i.e. the sub parts, where a highest match is detected, grouping may be performed to group together pairs of such positions at a mutual distance that corresponds to a distance between dots in the dot code (i.e. pitch of the dots in the dot ode as imaged in the image). For two pairs of positions of dots, a triangle TR is generated using lines through the pairs of positions of dots and an intersection line IL of the lines through the pairs of positions of dots. The intersection line may for example extend between a dot of one pair and a dot of the other pair which dots have a largest mutual distance between their positions. In case of more than two pairs of dots (i.e. two pairs of positions of dots), plural corresponding triangles may be formed, each based on two respective pairs of dots. The lines form a triangle. In case of more than two pairs of dots, plural corresponding triangles may be formed, each triangle from two pairs of dots. The triangles may then be verified as to whether or not the pairs from which the triangle has been formed may be part of the same dot code, namely by comparing a size and angle of the triangle against a predetermined size and angle (the predetermined size and angle being set to correspond to pairs of dots one the same dot code). For example, the predetermined size and angle may be a range. As another example the predetermined size and angle may be have a predetermined values, whereby a triangle having a size and angle closest to the predetermined values of size and angle is selected. The predetermined size and angle may for example be set based on a size of a triangle formed by a pair of dots in the start dots SD and a pair of dots in the end dots ED, hence enabling to determine, e.g. interpolate, the reading line from the start dots to the end dots enabling the reading line to extend from the start dots to the end dots, i.e. along the dot code. Two pairs, which are likely to represent two pairs of dots in a dot code, are thus compared to the triangle that represents an outline of the curve of the dot code. Using the triangle, a reading line, e.g. a curve, is determined in the image, along which the dots are expected to be found. The dots (or the absence of dots in case the absence encodes a dot value of e.g. zero) may be read in the image along the reading line.

Figure 6 depicts a dot code detection system for detecting a dot code on items, such as in the present example waste items. The detected dot code is used to sort the item, e.g. to enable sorting of the waste items. For example, the dot code may encode data representing a type of material of the item on which the dot code is provided, hence enabling to sort the items according to their material type.

For example, the items may be plastic packages, such as bottles, blisters, a trays. The plastic package may comprise any plastic, such as polyethylene (PE), polyethylene terephthalate (PET), polypropylene (PP), or polyethyleenfuranoaat (PEF).

The dot code detection system comprises a source of radiation SRC which irradiates onto the items IT. The source of radiation may be configured to emit any suitable radiation such as visible light, ultraviolet, infrared, etc. The source of radiation may emit diffuse light. As another example, the source of radiation may emit a laser beam, and may comprise a scanner to scan a surface of the item by the laser beam. In the present example, the items are conveyed along the source of radiation by a conveyor CNV.

The source of radiation may be configured to irradiate in a spectrum that at least partly overlaps with a spectrum in which the spectral reflectivity of the background surface differs from the spectral reflectivity of the edge surface. The term reflectivity may comprise any kind of reflectivity such as diffuse reflections as well as mirroring type of reflectivity.

A detector detects an image of at least part of the surface of the item. As depicted in Figure 6, the detector may for example comprise a camera CAM.

The camera is configured to be detective of radiation in at least part of the spectrum in which the spectral reflectivity of the background surface differs from the spectral reflectivity of the edge surface, wherein the difference in spectral reflectivity of the edge surface as compared to the background surface provides for a difference in the image as detected by the camera.

As the conveyor conveys the items to move along the irradiation emitted by the source of irradiation, and to move along the detector, i.e. in the present example the camera, at least part of the surface of each one of the items is imaged successively.

The image as captured by the camera is provided to an image processing system, such as a suitable programmed data processing system. The image processing system is configured to perform the steps of distinguishing the edge surface of the dot from the background surface, dilating the edge surface to thereby erode the centre surface and erode the openings in the edge surface, erode the dilated edge surface to size the dot back to its original perimeter. The steps of dilation and erosion effectively fill the centre surface with a same pixel value as the edge surface. Thus, a detectability of the dots may be increased in that the effective contrasting area, is increased from the edge surface towards the edge surface, centre surface and openings. The dots may then be read from the image and a dot code derived therefrom as described above.

Based on the obtained dot code, data may be sent to a selector device SEL, such as a pneumatic nozzle which blows the items to either the first further conveyor CONV1 or the second further conveyor CONV2. Responsive to the data received from the image processing system, the selector divers the item to a designated one of the first and second further conveyors CONV1, CONV2, to convey the item in accordance with the selection.

## Claims

1. A method of detecting a dot code comprising plural dots (DT) arranged on a background surface (BCK), wherein each dot comprises a centre surface (CTR) and an edge surface (EDG) which at least partly surrounds the centre surface, wherein a spectral reflectivity of the edge surface differs from a spectral reflectivity of the background surface, and wherein a spectral reflectivity of the centre surface is a same as the spectral reflectivity of the background surface, the method comprising:
irradiating the dot code and the background surface by a source of radiation capturing by a reader an image of the dot code and the background surface irradiated by the source of radiation;
distinguishing in the image the edge surface from the background surface based on the difference between the spectral reflectivity of the edge surface and the spectral reflectivity of the background surface;
processing the image of the dot code by dilating in the image the edge surface of the dot, until the centre surface has been closed by the dilating,
reading the processed image to derive the dot code from the processed image.

2. The method according to claim 1, wherein the processing further comprises eroding the dilated edge surface.

3. The method according to claim 1 or 2, wherein the distinguishing comprises thresholding the image of the dot code.

4. The method according to any one of the preceding claims, wherein the processing further comprises determining a size of the edge surface in the image, wherein the processing preferably further comprises
- scaling the image according to the determined size of the edge surface in the image, and/or
- determining an extent of the dilating of the edge surface of the dot from the size of the edge surface in the image.

5. The method according to any one of the preceding claims, wherein the reading the processed image to derive the dot code from the processed image comprises:
determining, for a plurality of positions in the image, a match to a template representing a dot,
selecting the positions for which a highest match has been determined,
finding in the positions for which the highest match has been determined, pairs of positions at a distance that matches a dot to dot distance in the dot code,
generating, for two of the pairs of positions of dots, a triangle using lines through the two pairs of positions of dots and an intersection of the lines through the two pairs of positions of dots, verifying a size and angle of the triangle against a predetermined size and angle, fitting, using the triangle, a dot code reading line onto the selected at least two pairs of positions, and
reading dots of the dot code along the dot code reading line.

6. The method according to any one of the preceding claims, wherein the edge surface partly surrounds the centre surface providing at least one opening (OP1, OP2) between the centre surface and the background surface, and wherein the dilating the edge surface of the dot closes the at least one opening between the centre surface and the background surface.

7. An item comprising a dot code, the dot code being detectable by the method of claim 1 and comprising plural dots arranged on a background surface, wherein the dots comprise a centre surface which is at least partly surrounded by an edge surface, wherein a spectral reflectivity of the edge surface differs from a spectral reflectivity of the background surface and wherein a spectral reflectivity of the centre surface is a same as the spectral reflectivity of the background surface.

8. The item according to claim 7, wherein the edge surface partly surrounds the centre surface providing at least one opening between the centre surface and the background surface, and wherein the dilating the edge surface of the dot closes the at least one opening between the centre surface and the background surface.

9. A dot code detection system for detecting a dot code comprising plural dots (DT) arranged on a background surface (BCK), wherein the dots comprise a centre surface (CTR) which is at least partly surrounded by an edge surface (EDG), wherein a spectral reflectivity of the edge surface differs from a spectral reflectivity of the background surface and wherein a spectral reflectivity of the centre surface is a same as the spectral reflectivity of the background surface: the dot code detection system comprising:
a source of radiation (SRC) configured to irradiate the dot code and the background surface, a reader (CAM) configured to capture an image of the dot code and the background surface irradiated by the source of radiation;
an image processing system (PROC) configured to process the image of the dot code and the background surface irradiated by the source of radiation,
wherein the image processing system is configured to:
distinguish in the image the edge surface from the background surface based on the difference between the spectral reflectivity of the edge surface and the spectral reflectivity of the background surface;
process the image of the dot code by dilating in the image the edge surface of the dot, until the centre surface has been closed by the dilating,
read the processed image to derive the dot code from the processed image.

10. The dot code detection system according to claim 9, wherein an image processing system further configured to erode the dilated edge surface.

11. The dot code detection system according to claim 9 or 10, wherein the distinguishing comprises thresholding the image of the dot code.

12. The dot code detection system according to any one of claims 9 - 11, wherein the image processing system further configured to determine a size of the edge surface in the image, wherein preferably the image processing system is further configured
- to scale the image according to the determined size of the edge surface in the image , and/or
- to determine an extent of the dilating of the edge surface of the dot from the size of the edge surface in the image.

13. The dot code detection system according to any one of claims 9 - 12, wherein the reading the processed image to derive the dot code from the processed image comprises:
determining, for a plurality of positions in the image, a match to a template representing a dot, selecting the positions for which a highest match has been determined,
finding in the positions for which the highest match has been determined, pairs of positions at a distance that matches a dot to dot distance in the dot code,
generating, for two of the pairs of positions of dots, a triangle using lines through the two pairs of positions of dots and an intersection of the lines through the two pairs of positions of dots, verifying a size and angle of the triangle against a predetermined size and angle,
fitting, using the triangle, a dot code reading line onto the selected at least two pairs of positions, and
reading dots of the dot code along the dot code reading line.

14. The dot code detection system according to any one of claims 9 - 13, wherein the edge surface partly surrounds the centre surface providing at least one opening (OP1, OP2) between the centre surface and the background surface, and wherein the image processing system further configured to closes the at least one opening between the centre surface and the background surface by the dilating of the edge surface of the dot.

15. The method according to any one of claims 1 - 6, or the item according to any one of claims 7 - 8, or the dot code detection system according to any one of claims 9 - 14, wherein the dot code comprises plural dots arranged in a geometric pattern, wherein preferably the geometric pattern comprises a line.

## Patentansprüche

1. Verfahren zur Erkennung eines Punktcodes, der mehrere Punkte (DT) umfasst, die auf einer Hintergrundfläche (BCK) angeordnet sind, wobei jeder Punkt eine Mittelfläche (CTR) und eine Randfläche (EDG) umfasst, die die Mittelfläche zumindest teilweise umgibt, wobei sich eine spektrale Reflektivität der Randfläche von einer spektralen Reflektivität der Hintergrundfläche unterscheidet, und wobei eine spektrale Reflektivität der Mittelfläche gleich wie die spektrale Reflektivität der Hintergrundfläche ist, wobei das Verfahren Folgendes umfasst:
Bestrahlen des Punktcodes und der Hintergrundfläche mit einer Strahlungsquelle; Aufnehmen eines Bildes des Punktcodes und der Hintergrundfläche, die mit der Strahlungsquelle bestrahlt werden, durch ein Lesegerät;
Unterscheiden der Randfläche von der Hintergrundfläche in dem Bild basierend auf der Differenz zwischen der spektralen Reflektivität der Randfläche und der spektralen Reflektivität der Hintergrundfläche;
Verarbeiten des Bildes des Punktcodes durch Aufweiten der Randfläche des Punkts in dem Bild, bis die Mittelfläche durch das Aufweiten geschlossen wurde, Lesen des verarbeiteten Bildes, um den Punktcode aus dem verarbeiteten Bild abzuleiten.

2. Verfahren nach Anspruch 1, wobei das Verarbeiten ferner Erodieren der aufgeweiteten Randfläche umfasst.

3. Verfahren nach Anspruch 1 oder 2, wobei das Unterscheiden Schwellenwertbildung für das Bild des Punktcodes umfasst.

4. Verfahren nach einem der vorhergehenden Ansprüche, wobei das Verarbeiten ferner Bestimmen einer Größe der Randfläche in dem Bild umfasst, wobei die Verarbeiten vorzugsweise ferner Folgendes umfasst:
- Skalieren des Bildes gemäß der bestimmten Größe der Randfläche in dem Bild und/oder
- Bestimmen eines Ausmaßes des Aufweitens der Randfläche des Punkts aus der Größe der Randfläche in dem Bild.

5. Verfahren nach einem der vorhergehenden Ansprüche, wobei das Lesen des verarbeiteten Bildes zum Ableiten des Punktcodes aus dem verarbeiteten Bild Folgendes umfasst:
Bestimmen einer Übereinstimmung mit einer Vorlage, die einen Punkt darstellt, für eine Mehrzahl von Positionen in dem Bild,
Auswählen der Positionen, für die eine höchste Übereinstimmung bestimmt wurde,
Ermitteln von Paaren von Positionen in einem Abstand, der mit einem Punkt-zu-Punkt-Abstand in dem Punktcode übereinstimmt, in den Positionen, für die die höchste Übereinstimmung bestimmt wurde,
Erzeugen eines Dreiecks für zwei der Paare von Positionen von Punkten unter Verwendung von Linien durch die zwei Paare von Positionen von Punkten und einem Schnittpunkt der Linien durch die zwei Paare von Positionen von Punkten, Vergleichen einer Größe und eines Winkels des Dreiecks mit einer vorbestimmten Größe und einem vorbestimmten Winkel,
Anpassen einer Punktcode-Leselinie unter Verwendung des Dreiecks an die ausgewählten mindestens zwei Paare von Positionen und
Lesen von Punkten des Punktcodes entlang der Punktcode-Leselinie.

6. Verfahren nach einem der vorhergehenden Ansprüche, wobei die Randfläche die Mittelfläche teilweise umgibt und mindestens eine Öffnung (OP1, OP2) zwischen der Mittelfläche und der Hintergrundfläche bereitstellt, und wobei das Aufweiten der Randfläche des Punkts die mindestens eine Öffnung zwischen der Mittelfläche und der Hintergrundfläche schließt.

7. Gegenstand, der einen Punktcode umfasst, wobei der Punktcode durch das Verfahren nach Anspruch 1 erkennbar ist und mehrere Punkte umfasst, die auf einer Hintergrundfläche angeordnet sind, wobei die Punkte eine Mittelfläche umfassen, die zumindest teilweise von einer Randfläche umgeben ist, wobei sich eine spektrale Reflektivität der Randfläche von einer spektralen Reflektivität der Hintergrundfläche unterscheidet und wobei eine spektrale Reflektivität der Mittelfläche gleich wie die spektrale Reflektivität der Hintergrundfläche ist.

8. Gegenstand nach Anspruch 7, wobei die Randfläche die Mittelfläche teilweise umgibt und mindestens eine Öffnung zwischen der Mittelfläche und der Hintergrundfläche bereitstellt, und wobei das Aufweiten der Randfläche des Punkts die mindestens eine Öffnung zwischen der Mittelfläche und der Hintergrundfläche schließt.

9. Punktcode-Erkennungssystem zum Erkennen eines Punktcodes, der mehrere Punkte (DT) umfasst, die auf einer Hintergrundfläche (BCK) angeordnet sind, wobei die Punkte eine Mittelfläche (CTR) umfassen, die zumindest teilweise von einer Randfläche (EDG) umgeben ist, wobei sich eine spektrale Reflektivität der Randfläche von einer spektralen Reflektivität der Hintergrundfläche unterscheidet und wobei eine spektrale Reflektivität der Mittelfläche gleich wie die spektrale Reflektivität der Hintergrundfläche ist: wobei das Punktcode-Erkennungssystem Folgendes umfasst:
eine Strahlungsquelle (SRC), die dazu ausgelegt ist, den Punktcode und die Hintergrundfläche zu bestrahlen,
ein Lesegerät (CAM), das dazu ausgelegt ist, ein Bild des Punktcodes und der Hintergrundfläche, die mit der Strahlungsquelle bestrahlt werden, aufzunehmen; ein Bildverarbeitungssystem (PROC), das dazu ausgelegt ist, das Bild des Punktcodes und der Hintergrundfläche, die mit der Strahlungsquelle bestrahlt werden, zu verarbeiten,
wobei das Bildverarbeitungssystem zu Folgendem ausgelegt ist:
Unterscheiden der Randfläche von der Hintergrundfläche in dem Bild basierend auf der Differenz zwischen der spektralen Reflektivität der Randfläche und der spektralen Reflektivität der Hintergrundfläche;
Verarbeiten des Bildes des Punktcodes durch Aufweiten der Randfläche des Punkts in dem Bild, bis die Mittelfläche durch das Aufweiten geschlossen wurde, Lesen des verarbeiteten Bildes, um den Punktcode aus dem verarbeiteten Bild abzuleiten.

10. Punktcode-Erkennungssystem nach Anspruch 9, wobei ein Bildverarbeitungssystem ferner dazu ausgelegt ist, die aufgeweitete Randfläche zu erodieren.

11. Punktcode-Erkennungssystem nach Anspruch 9 oder 10, wobei das Unterscheiden Schwellenwertbildung für das Bild des Punktcodes umfasst.

12. Punktcode-Erkennungssystem nach einem der Ansprüche 9-11, wobei das Bildverarbeitungssystem ferner dazu ausgelegt ist, eine Größe der Randfläche in dem Bild zu bestimmen, wobei vorzugsweise das Bildverarbeitungssystem ferner zu Folgendem ausgelegt ist:
- Skalieren des Bildes gemäß der bestimmten Größe der Randfläche in dem Bild und/oder
- Bestimmen eines Ausmaßes des Aufweitens der Randfläche des Punktes aus der Größe der Randfläche in dem Bild.

13. Punktcode-Erkennungssystem nach einem der Ansprüche 9-12, wobei das Lesen des verarbeiteten Bildes zum Ableiten des Punktcodes aus dem verarbeiteten Bild Folgendes umfasst:
Bestimmen einer Übereinstimmung mit einer Vorlage, die einen Punkt darstellt, für eine Mehrzahl von Positionen in dem Bild,
Auswählen der Positionen, für die eine höchste Übereinstimmung bestimmt wurde,
Ermitteln von Paaren von Positionen in einem Abstand, der mit einem Punkt-zu-Punkt-Abstand in dem Punktcode übereinstimmt, in den Positionen, für die die höchste Übereinstimmung bestimmt wurde,
Erzeugen eines Dreiecks für zwei der Paare von Positionen von Punkten unter Verwendung von Linien durch die zwei Paare von Positionen von Punkten und
einem Schnittpunkt der Linien durch die zwei Paare von Positionen von Punkten, Vergleichen einer Größe und eines Winkels des Dreiecks mit einer vorbestimmten Größe und einem vorbestimmten Winkel,
Anpassen einer Punktcode-Leselinie unter Verwendung des Dreiecks an die ausgewählten mindestens zwei Paare von Positionen und
Lesen von Punkten des Punktcodes entlang der Punktcode-Leselinie.

14. Punktcode-Erkennungssystem nach einem der Ansprüche 9-13, wobei die Randfläche die Mittelfläche teilweise umgibt und mindestens eine Öffnung (OP1, OP2) zwischen der Mittelfläche und der Hintergrundfläche bereitstellt, und wobei das Bildverarbeitungssystem ferner dazu ausgelegt ist, die mindestens eine Öffnung zwischen der Mittelfläche und der Hintergrundfläche durch das Aufweiten der Randfläche des Punkts zu schließen.

15. Verfahren nach einem der Ansprüche 1-6 oder Gegenstand nach einem der Ansprüche 7-8 oder Punktcode-Erkennungssystem nach einem der Ansprüche 9-14, wobei der Punktcode mehrere Punkte umfasst, die in einem geometrischen Muster angeordnet sind, wobei vorzugsweise das geometrische Muster eine Linie umfasst.

## Revendications

1. Procédé de détection d'un code à points comprenant plusieurs points (DT) agencés sur une surface d'arrière-plan (BCK), dans lequel chaque point comprend une surface centrale (CTR) et une surface de bord (EDG) qui entoure au moins partiellement la surface centrale, dans lequel une réflectivité spectrale de la surface de bord diffère d'une réflectivité spectrale de la surface d'arrière-plan, et dans lequel une réflectivité spectrale de la surface centrale est identique à la réflectivité spectrale de la surface d'arrière-plan, le procédé comprenant :
l'exposition du code à points et de la surface d'arrière-plan à une source de rayonnement
la capture, par un lecteur, d'une image du code à points et de la surface d'arrière-plan exposés à la source de rayonnement ;
la distinction, dans l'image, entre la surface de bord et la surface d'arrière-plan en fonction de la différence entre la réflectivité spectrale de la surface de bord et la réflectivité spectrale de la surface d'arrière-plan ;
le traitement de l'image du code à points en dilatant, dans l'image, la surface de bord du point, jusqu'à ce que la surface centrale ait été fermée par la dilatation, la lecture de l'image traitée pour dériver le code à points de l'image traitée.

2. Procédé selon la revendication 1, dans lequel le traitement comprend en outre l'érosion de la surface de bord dilatée.

3. Procédé selon la revendication 1 ou 2, dans lequel la distinction comprend le seuillage de l'image du code à points.

4. Procédé selon l'une quelconque des revendications précédentes, dans lequel le traitement comprend en outre la détermination d'une taille de la surface de bord dans l'image, dans lequel le traitement comprend en outre de préférence
- la mise à l'échelle de l'image en fonction de la taille déterminée de la surface de bord dans l'image, et/ou
- la détermination d'une étendue de la dilatation de la surface de bord du point à partir de la taille de la surface de bord dans l'image.

5. Procédé selon l'une quelconque des revendications précédentes, dans lequel la lecture de l'image traitée pour dériver le code à points à partir de l'image traitée comprend :
la détermination, pour une pluralité de positions dans l'image, d'une correspondance avec un modèle représentant un point,
la sélection des positions pour lesquelles une correspondance la plus élevée a été déterminée,
la recherche, dans les positions pour lesquelles la correspondance la plus élevée a été déterminée, de paires de positions à une distance correspondant à une distance point à point dans le code à points,
la génération, pour deux des paires de positions de points, d'un triangle utilisant des lignes passant par les deux paires de positions de points et d'une intersection des lignes passant par les deux paires de positions de points,
la vérification d'une taille et d'un angle du triangle par rapport à une taille et un angle prédéterminés,
l'ajustement, à l'aide du triangle, d'une ligne de lecture de code à points sur les au moins deux paires de positions sélectionnées, et
la lecture de points du code à points le long de la ligne de lecture du code à points.

6. Procédé selon l'une quelconque des revendications précédentes, dans lequel la surface de bord entoure partiellement la surface centrale fournissant au moins une ouverture (OP1, OP2) entre la surface centrale et la surface d'arrière-plan, et dans lequel la dilatation de la surface de bord du point ferme l'au moins une ouverture entre la surface centrale et la surface d'arrière-plan.

7. Article comprenant un code à points, le code à points pouvant être détecté par le procédé selon la revendication 1 et comprenant plusieurs points disposés sur une surface d'arrière-plan, dans lequel les points comprennent une surface centrale qui est au moins partiellement entourée par une surface de bord, dans lequel une réflectivité spectrale de la surface de bord diffère d'une réflectivité spectrale de la surface d'arrière-plan et dans lequel une réflectivité spectrale de la surface centrale est identique à la réflectivité spectrale de la surface d'arrière-plan.

8. Article selon la revendication 7, dans lequel la surface de bord entoure partiellement la surface centrale fournissant au moins une ouverture entre la surface centrale et la surface d'arrière-plan, et dans lequel la dilatation de la surface de bord du point ferme l'au moins une ouverture entre la surface centrale et la surface d'arrière-plan.

9. Système de détection de code à points pour détecter un code à points comprenant plusieurs points (DT) disposés sur une surface d'arrière-plan (BCK), dans lequel les points comprennent une surface centrale (CTR) qui est au moins partiellement entourée par une surface de bord (EDG), dans lequel une réflectivité spectrale de la surface de bord diffère d'une réflectivité spectrale de la surface d'arrière-plan et dans lequel une réflectivité spectrale de la surface centrale est identique à la réflectivité spectrale de la surface d'arrière-plan : le système de détection par code à points comprenant :
une source de rayonnement (SRC) configurée pour émettre un rayonnement vers le code à points et la surface d'arrière-plan,
un lecteur (CAM) configuré pour capturer une image du code à points et de la surface d'arrière-plan exposés à la source de rayonnement ;
un système de traitement d'images (PROC) configuré pour traiter l'image du code à points et la surface d'arrière-plan exposés à la source de rayonnement,
dans lequel le système de traitement d'images est configuré pour :
faire la distinction, dans l'image, entre la surface de bord et la surface d'arrière-plan en fonction de la différence entre la réflectivité spectrale de la surface de bord et la réflectivité spectrale de la surface d'arrière-plan ;
traiter l'image du code à points en dilatant, dans l'image, la surface de bord du point, jusqu'à ce que la surface centrale ait été fermée par la dilatation, lire l'image traitée pour dériver le code à points de l'image traitée.

10. Système de détection de code à points selon la revendication 9, dans lequel un système de traitement d'image est en outre configuré pour éroder la surface de bord dilatée.

11. Système de détection de code à points selon la revendication 9 ou 10, dans lequel la distinction comprend le seuillage de l'image du code à points.

12. Système de détection de code à points selon l'une quelconque des revendications 9 à 11, dans lequel le système de traitement d'image est en outre configuré pour déterminer une taille de la surface de bord dans l'image, dans lequel de préférence le système de traitement d'image est en outre configuré
- pour mettre l'image à l'échelle selon la taille déterminée de la surface de bord dans l'image, et/ou
- pour déterminer une étendue de dilatation de la surface de bord du point à partir de la taille de la surface de bord dans l'image.

13. Système de détection de code à points selon l'une quelconque des revendications 9 à 12, dans lequel la lecture de l'image traitée pour dériver le code à points à partir de l'image traitée comprend :
la détermination, pour une pluralité de positions dans l'image, d'une correspondance avec un modèle représentant un point,
la sélection des positions pour lesquelles une correspondance la plus élevée a été déterminée,
la recherche, dans les positions pour lesquelles la correspondance la plus élevée a été déterminée, de paires de positions à une distance correspondant à une distance point à point dans le code à points,
la génération, pour deux des paires de positions de points, d'un triangle utilisant des lignes passant par les deux paires de positions de points et d'une intersection des lignes passant par les deux paires de positions de points,
la vérification d'une taille et d'un angle du triangle par rapport à une taille et un angle prédéterminés,
l'ajustement, à l'aide du triangle, d'une ligne de lecture de code à points sur les au moins deux paires de positions sélectionnées, et
la lecture de points du code à points le long de la ligne de lecture du code à points.

14. Système de détection de code à points selon l'une quelconque des revendications 9 à 13, dans lequel la surface de bord entoure partiellement la surface centrale fournissant au moins une ouverture (OP1, OP2) entre la surface centrale et la surface d'arrière-plan, et dans lequel le système de traitement d'image est en outre configuré pour fermer l'au moins une ouverture entre la surface centrale et la surface d'arrière-plan par dilatation de la surface de bord du point.

15. Procédé selon l'une quelconque des revendications 1 à 6, ou article selon l'une quelconque des revendications 7 à 8, ou système de détection de code à points selon l'une quelconque des revendications 9 à 14, dans lequel le code à points comprend plusieurs points agencés selon un motif géométrique, dans lequel de préférence le motif géométrique comprend une ligne.
